# EUROPÄISCHE PATENTSCHRIFT

(11) **EP 1 126 576 B1**
(45) Veröffentlichungstag und Bekanntmachung des Hinweises auf die Patenterteilung: **11.11.2015**
(21) Anmeldenummer: 01100491.8
(22) Anmeldetag: 09.01.2001
(51) Int. Cl.: H02J 9/06

(54) **Vorrichtung zur unterbrechungsfreien Stromversorgung einer elektrischen Last mit Wechselstrom**
Device for uninterrupted supply of a load with AC current
Dispositif d'alimentation sans interruption d'une charge en courant alternatif au charge électrique

(30) Priorität: 21.01.2000 DE 10002583
(43) Veröffentlichungstag der Anmeldung: 22.08.2001
(73) Patentinhaber: Piller Group GmbH, 37520 Osterode am Harz (DE)
(72) Erfinder: Reuter, Uwe, 37520 Osterode (DE)
(74) Vertreter: REHBERG HÜPPE + PARTNER

(56) Entgegenhaltungen:
- DE-A- 3 002 946
- US-A- 4 460 834
- US-A- 4 471 233
- PATENT ABSTRACTS OF JAPAN Bd. 1996, Nr. 08, 30. August 1996 (1996-08-30) & JP 08 103037 A (YUASA CORP; TANIGUCHI KATSUNORI), 16. April 1996 (1996-04-16)
- PATENT ABSTRACTS OF JAPAN Bd. 0141, Nr. 12 (E-0897), 28. Februar 1990 (1990-02-28) & JP 01 311837 A (HITACHI LTD), 15. Dezember 1989 (1989-12-15)
- KAWABATA T; MIYASHITA T; SASHIDA N; YAMAMOTO Y: "Three phase parallel processing UPS using multi-functional inverter", INDUSTRY APPLICATIONS SOCIETY ANNUAL MEETING, 1 October 1989 (1989-10-01), - 5 October 1989 (1989-10-05), pages 982-987, San Diego, CA, USA

## Beschreibung

Die Erfindung bezieht sich auf eine Vorrichtung zur unterbrechungsfreien Stromversorgung einer elektrischen Last mit Wechselstrom, die im ungestörten Normalfall von einem Stromnetz oder einer anderen externen Stromquelle versorgt wird. Für diesen Gegenstand wird im folgenden auch die allgemein gebräuchliche Abkürzung USV verwandt werden.

Es sind Vorrichtungen (siehe z.B. DE 197 15 468 und JP 08 103037) zur unterbrechungsfreien Stromversorgung einer elektrischen Last mit Wechselstrom bekannt, die nicht nur im Störbetrieb, sondern auch im ungestörtem Normalfall, in dem die elektrische Last von einem Stromnetz oder einer anderen externen Stromquelle versorgt wird, eine der Last zur Verfügung gestellte Ausgangsspannung regulieren.

Dies erfolgt beispielsweise bei dem Produkt UNIBLOCK der Anmelderin, das eine elektrische Maschine mit voneinander getrennter Motor- und Generatorwicklung aufweist. Die Motorwicklung der elektrischen Maschine wird zu ihrem Antrieb verwendet, wobei die Speisung im Normalfall durch die externe Stromquelle erfolgt und im Störfall beispielsweise über eine Batterie, der ein Wechselrichter nachgeschaltet ist. Für längere Unterbrechungen der Stromversorgung durch die externe Stromquelle kann auch eine Brennkraftmaschine vorgesehen sein, die die elektrische Maschine direkt antreibt. Über die Generatorwicklung der elektrischen Maschine wird die Ausgangsspannung für die elektrische Last abgegriffen. Diese Ausgangsspannung weist nahezu ideale Sinusform selbst bei schwankender Eingangsspannung oder schwankendem Ausgangsstrom auf. Dies beruht auf dem Aufbau der elektrischen Maschine, der einen speziellen Dämpferkäfig umfaßt. Das bekannte Produkt Uniblock ist jedoch mit dem Nachteil verbunden, daß die spezielle elektrische Maschine sehr aufwendig und kostenintensiv ist.

Bei USV's ist es weiterhin grundsätzlich bekannt, die Ersatzstromversorgung für den Störbetrieb lastseitig an eine Koppeldrossel anzuschließen, die zwischen der Last und der externen Stromquelle angeordnet ist. Die Koppeldrossel verhindert unter anderem das Abfließen von Strom in ein zusammenbrechendes Stromnetz, bevor ein schnellöffnender Schalter, der üblicherweise quellenseitig vor der Koppeldrossel angeordnet ist, geöffnet werden kann. Zumindest verhindert die Koppeldrossel das Entstehen großer Kurzschlußströme zum Stromnetz.

Weiterhin ist es bekannt, daß ein Ersatzspeicher für elektrische Energie in einer USV verschiedene Energiequellen aufweisen kann, die typischerweise Gleichstrom zur Verfügung stellen, welcher über einen Wechselrichter in Wechselstrom umgewandelt wird.

Der Erfindung liegt die Aufgabe zugrunde, eine Vorrichtung zur unterbrechungsfreien Stromversorgung einer elektrischen Last mit Wechselstrom aufzuzeigen, bei der eine elektrische Maschine in Standardbauweise zur Anwendung kommt und die dennoch sowohl im Normalfall als auch im Störbetrieb eine stabile Ausgangsspannung sowie eine hohe Kurzschlußleistung sicherstellen kann.

Erfindungsgemäß wird diese Aufgabe durch die Merkmale des Patentanspruchs 1 gelöst. Vorteilhafte Ausführungsform der neuen USV sind in den Unteransprüchen 2 bis 9 beschrieben.

Die neue USV kombiniert die Vorteile eines statischen Systems, wie insbesondere eine schnelle Spannungsregelung, mit denjenigen eines rotierenden Systems, wie insbesondere eine hohe Kurzschlußleistung.

Der bei der neuen USV im Nebenschluß lastseitig an die Koppeldrossel angeschlossene Generator ist ein Standardgenerator, der zu günstigen Kosten mit unterschiedlichsten Leistungen verfügbar ist. Bei dem Generator wird die eine vorhandene Wicklung sowohl als Motor- als auch gleichzeitig als Generatorwicklung verwendet. Der Generator stellt dabei sowohl im Normalfall als auch im Störbetrieb die Ausgangsspannung, die der Last zur Verfügung gestellt wird, sowie die für die jeweilige Last notwendige Blindleistung zur Verfügung. Die Wirkleistung für die Last wird im Normalfall von der externen Stromquelle, d. h. in der Regel von dem Stromnetz zur Verfügung gestellt. Im Störbetrieb erfolgt die Versorgung mit Wirkleistung durch den Ersatzspeicher für elektrische Energie über den Umrichter. Mittel zur Regeln der Ausgangsspannung, d.h. in der Praxis ein Regler, steuern den Umrichter im Störbetrieb in Abhängigkeit von einem Meßsignal von Mitteln zum Erfassen der Ausgangsspannung, d.h. in der Praxis ein Spannungssensor, über ein Steuersignal derart an, daß die der Last zur Verfügung gestellte Ausgangsspannung einen Zeitverlauf mit einer gewünschten Form aufweist. Normalerweise ist ein sinusförmiger Verlauf der Ausgangsspannung gewünscht.

Vorteilhaft ist, daß die Mittel zum Regeln der Ausgangsspannung, auch wenn kein Ausfall der externen Stromquelle vorliegt, in Abhängigkeit von dem Ausgangssignal der Mittel zum Erfassen der Ausgangsspannung den Zeitverlauf der Ausgangsspannung auf die gewünschte Form regeln. Auf diese Weise trägt der Umrichter auch im Normalfall zu einer Verbesserung der Qualität der Stromversorgung bei. Der Umrichter wirkt so bei jeder Abweichung des Zeitverlaufs von der Idealform auf die Ausgangsspannung ein.

Es versteht sich, daß als Umrichter nur eine solche Einrichtung für die neue USV in Frage kommt, die aufgrund des Steuersignals ausreichend schnell auf unerwünschte Schwankungen der Ausgangsspannung reagieren kann. Dies ist sicherstellbar, wenn der Umrichter als IGBT-Umrichter ausgebildet wird. IGBT steht bekanntermaßen für Isolated Gate Bipolar Transistor und damit für eine bestimmte im leistungselektronischen Bereich einsetzbare Halbleitertechnik.

Eine ausreichend schnelle Ausbildung der Mittel zum Regeln der Ausgangsspannung, d.h. des Reglers, ist absolut problemlos und entspricht dem Stand der Technik.

Zum Überbrücken längerer Ausfälle der externen Stromquelle kann eine Brennkraftmaschine zum direkten Antreiben des Generators im Störbetrieb vorgesehen sein. Diese Brennkraftmaschine ist vorteilhafterweise an eine Überholkupplung an den Generator angekoppelt, so daß die Brennkraftmaschine angefahren werden kann, ohne den Generator zu stören, und erst beim Erreichen ihrer Nenndrehzahl den Generator antreibt. Ein separat zu steuerndes Ankuppeln der laufenden Brennkraftmaschine an den Generator entfällt dabei.

Der Ersatzspeicher für elektrische Energie, der den Umrichter der neuen USV mit Strom versorgt, weist mindestens eine Gleichstromenergiequelle oder Wechselstromenergiequelle auf. Die Gleichstromenergiequelle kann ihrerseits beispielsweise einen superleitenden magnetischen Energiespeicher (SMES), eine Superkapazität, eine Batterie oder eine Brennstoffzelle aufweisen. Die Wechselstromquelle kann ihrerseits einen Generator mit einer rotierenden Schwungmasse aufweisen, wobei dem Generator ein Umrichter vorgeschaltet sein kann, so daß er parallel zu etwaigen Gleichstromquellen geschaltet werden kann.

Zwischen dem von den Mitteln zur Regelung der Ausgangsspannung angesteuerten Umrichter und der Last kann ein Transformator vorgesehen sein. Dieser Transformator ist vorzugsweise so angeordnet, daß er sich auch zwischen dem Generator und dem Umrichter befindet. So kann mit einem IGBT-Umrichter auch eine Last mit einer Ausgangsspannung im Mittelspannungsbereich versorgt bzw. die entsprechende Ausgangsspannung auf eine gewünschte Form eingeregelt werden. Der Generator kann als Standardgenerator ohne weiteres unmittelbar für den Mittelspannungsbereich ausgelegt werden. Dies ist ein besonderer Vorteil gegenüber elektrischen Sondermaschinen, die für diesen Spannungsbereich üblicherweise nicht zu Verfügung stehen.

Wie auch im Stand der Technik bereits bekannt, kann die Koppeldrossel teilweise auch zwischen dem Generator und dem Umrichter einerseits und der Last andererseits vorgesehen sein, um den Generator bzw. den Umrichter beispielsweise vor hohen Kurzschlußströmen im Bereich der Last zu schützen.

Die Erfindung wird im folgenden anhand von zwei Ausführungsbeispielen näher erläutert und beschrieben, dabei zeigt
- Figur 1: ein Einlinienschaubild einer Basisausführungsform der neuen USV und
- Figur 2: ein Einlinienschaubild einer erweiterten Ausführungsform der neuen USV.

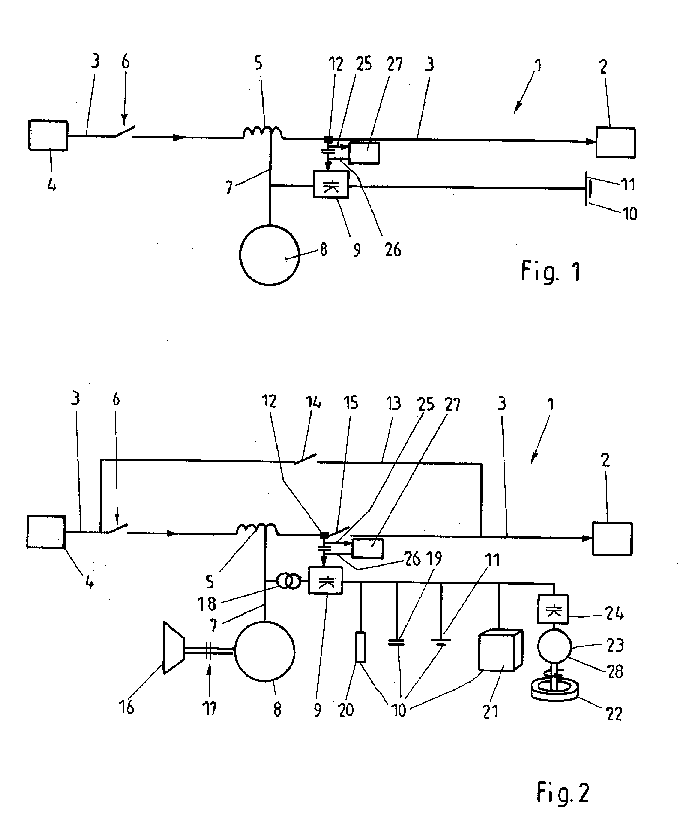

Die in Figur 1 dargestellte Vorrichtung 1 zur unterbrechungsfreien Stromversorgung einer elektrischen Last 2 weist in einer Verbindungsleitung 3 zwischen einer externen Stromquelle 4, beispielsweise einem öffentlichen Stromnetz, und der Last 2 eine Koppeldrossel 5 und einen schnellöffnenden Schalter 6 auf. Lastseitig ist an die Koppeldrossel 5 eine Stichleitung 7 angeschlossen, die einmal zu einem Generator 8 und einmal zu einem Umrichter 9 führt. Der Generator 8 wird damit im Nebenschluß zu der eigentlichen Energieversorgung mit Wirkleistung betrieben. Der Umrichter 9 wird von einer Gleichstromenergiequelle 10 gespeist, die hier als Batterie 11 ausgebildet ist, und über ein Steuersignal 26 von einem Regler 27 angesteuert. Mit dem Umrichter 9 regelt der Regler 27 die der Last 2 zur Verfügung gestellte Ausgangsspannung. Hierzu ist weiter ein Spannungssensor 12 vorgesehen, die diese Ausgangsspannung erfaßt und ein Meßsignal 25 abgibt. Das Meßsignal 25 berücksichtigt der Regelalgorithmus des Reglers 27 derart, daß Abweichungen von einer idealen Sinusform der Ausgangsspannung und von den für sie gewünschten Spannungswerten (Scheitelwert bzw. Effektivwert) möglichst vollständig und instantan ausgeglichen werden. Dabei kann der Regler 27 diese Korrektur der Ausgangsspannung mittels Ansteuerung des Umrichters 9 auch dann vornehmen, wenn die externe Stromquelle 4 bei geschlossenem Schalter 6 die Last versorgt. Insbesondere ist der Umrichter 9 aber vorgesehen, die Leistungsversorgung der Last 2 beim Ausfall der externen Stromquelle 4 aus der Gleichstromenergiequelle 10 vorzunehmen. Beim Aufnehmen dieses Störbetriebs wird der Schalter 6 möglichst schnell geöffnet. Die Koppeldrossel 5 verhindert aber auch im Übergangszeitraum das Abfließen großer Ströme zu der externen Stromquelle 4 und damit ein Zusammenbrechen der Ausgangsspannung an der Last 2. Der sowohl im Normalfall als auch im Störbetrieb mitlaufende Generator 8 stellt die Grundform der Ausgangsspannung bereit und die für die Last 2 erforderliche Blindleistung. Da die Qualität des zeitlichen Verlaufs der Ausgangsspannung durch den Umrichter 9 auch im Normalfall festgelegt werden kann, sind die Anforderungen an den Generator 8 auch bei geringer Qualität der Stromversorgung durch die externe Stromquelle 4 nicht hoch. Vielmehr kann hier ein Standardgenerator verwendet werden. Die Anforderungen an den Umrichter 9 sind hingegen sehr hoch, da ein sehr schnelles Ansprechen auf unerwünschte Veränderungen der Ausgangsspannung erforderlich ist. Dieses Ansprechverhalten wird durch Ausbildung des Umrichters 9 als IGBT-Umrichter realisiert. Die in Figur 2 skizzierte USV 1 unterscheidet sich von derjenigen gemäß Figur 1 durch einige zusätzliche Einrichtungen. Im Prinzip ist die Funktionsweise aber dieselbe wie gemäß Figur 1. Gemäß Figur 2 ist ein Bypass 13 vorgesehen, mit dem die USV 1 bei ihrem Ausfall überbrückbar ist, um ihr dann jeden Einfluß auf die Last 2 zu nehmen. Hierzu ist ein Schalter 14 in dem Bypass 13 zu schließen und neben dem Schalter 6 ein Schalter 15 in dem überbrückten Teil der Verbindungsleitung 3 zu öffnen. Weiterhin kann der Standardgenerator zum Überbrücken längerer Ausfälle der externen Stromquelle 4 mit einer Brennkraftmaschine 16 angetrieben werden, wobei diese über eine Überholkupplung 17 an den Generator 8 angeschlossen ist. Darüberhinaus ist von der Koppeldrossel 5 und dem Generator 8 aus betrachtet vor dem Umrichter 9 ein Transformator 18 vorgesehen. Dieser Transformator 18 ermöglicht es, die elektrische Last 2 im Mittelspannungsbereich zu betreiben, für den ein IGBT-Umrichter nicht direkt geeignet ist. Ein Standardgenerator als Generator 8 kann aber ohne weiteres unmittelbar für den Mittelspannungsbereich ausgelegt sein. Letztlich sind in Figur 2 verschiedene Gleichstromenergiequellen 10 zur Versorgung des Umrichters 9 wiedergegeben. Dies sind neben der bereits in Figur 1 angedeuteten Batterie 11 eine Superkapazität 19, ein superleitender magnetischer Energiespeicher 20 und eine Brennstoffzelle 21. Weiterhin ist als Wechselstromenergiequelle 28 eine rotierende Schwungmasse 22 mit nachgeschaltetem Generator 23 vorgesehen. Allerdings ist dieser Wechselstromenergiequelle 28 ein weiterer Umrichter 24 vorgeschaltet, bei dem es sich ebenfalls um eine IGBT-Einrichtung handeln kann, und sie ist dann parallel zu den Gleichstromenergiequellen 10 geschaltet. Darüberhinaus sind noch andere Gleich- und Wechselstromenergiequellen, die im Stand der Technik grundsätzlich bekannt sind, auch bei der neuen USV einsetzbar.

### BEZUGSZEICHENLISTE

- 1: - USV
- 2: - Last
- 3: - Verbindungsleitung
- 4: - Stromquelle
- 5: - Koppeldrossel
- 6: - Schalter
- 7: - Stichleitung
- 8: - Generator
- 9: - Umrichter
- 10: - Gleichstromenergiequelle

- 11: - Batterie
- 12: - Spannungssensor
- 13: - Bypass
- 14: - Schalter
- 15: - Schalter
- 16: - Brennkraftmaschine
- 17: - Überholkupplung
- 18: - Transformator
- 19: - Superkapazität
- 20: - SMES

- 21: - Brennstoffzelle
- 22: - Schwungmasse
- 23: - Generator
- 24: - Umrichter
- 25: - Meßsignal
- 26: - Steuersignal
- 27: - Regler

## Patentansprüche

1. Vorrichtung zur unterbrechungsfreien Stromversorgung einer elektrischen Last (2) mit Wechselstrom, die im ungestörten Normalfall von einem Stromnetz oder einer anderen externen Stromquelle (4) versorgt wird,
mit einer Koppeldrossel (5) zwischen der Last (2) und der externen Stromquelle (4),
mit einem lastseitig an die Koppeldrossel (5) angeschlossenen Generator (8), wobei der Generator (8) eine einzige Wicklung aufweist, die sowohl als Motor- als auch als Generatorwicklung verwendet wird,
mit einem Ersatzspeicher für elektrische Energie, der über einen Umrichter (9) einerseits ebenfalls lastseitig an die Koppeldrossel (5) und andererseits an die einzige Wicklung des Generators angeschlossen ist,
mit einem Schalter (6), der quellenseitig vor der Koppeldrossel (5) angeordnet ist und der bei eintretendem Störbetrieb öffnet, und
mit Mitteln (12) zum Erfassen einer der Last (2) zur Verfügung gestellten Ausgangsspannung, die ein Messsignal (25) abgeben,
mit Mitteln (27) zum Regeln der Ausgangsspannung, die als Eingangssignal das Messsignal (25) verwenden und als Ausgangssignal ein Steuersignal (26) an den Umrichter abgeben,
wobei der Generator (8) sowohl im ungestörten Normalbetrieb als auch im Störbetrieb bei Ausfall der externen Stromquelle (4) mitläuft,
**dadurch gekennzeichnet, dass** der Umrichter ein IGBT-Umrichter ist und dass die Mittel (27) zum Regeln der Ausgangsspannung einen Zeitverlauf der Ausgangsspannung sowohl im ungestörten Normalbetrieb als auch im Störbetrieb bei Ausfall der externen Stromquelle (4) mittels des Umrichters auf eine gewünschte Form regeln.

2. Vorrichtung nach Anspruch 1, **dadurch gekennzeichnet, dass** die gewünschte Form des Zeitverlaufs der Ausgangsspannung eine Sinusform ist.

3. Vorrichtung nach einem der Ansprüche 1 und 2, **dadurch gekennzeichnet, dass** eine Brennkraftmaschine (16) zum Antreiben des Generators (8) im Störbetrieb vorgesehen ist.

4. Vorrichtung nach Anspruch 3, **dadurch gekennzeichnet, dass** die Brennkraftmaschine (16) über eine Überhohlkupplung (17) an den Generator (8) angekoppelt ist.

5. Vorrichtung nach einem der Ansprüche 1 bis 4, **dadurch gekennzeichnet, dass** der Ersatzspeicher für elektrische Energie mindestens eine Gleichstromenergiequelle (10) oder eine Wechselstromenergiequelle (28) aufweist.

6. Vorrichtung nach Anspruch 5, **dadurch gekennzeichnet, dass** der Ersatzspeicher für elektrische Energie einen superleitenden magnetischen Energiespeicher (SMES) (20), eine Superkapazität (19), eine Batterie (11) oder eine Brennstoffzelle (21) als Gleichstromenergiequelle (10) aufweist.

7. Vorrichtung nach Anspruch 6, **dadurch gekennzeichnet, dass** der Ersatzspeicher für elektrische Energie einen Generator (23) in Kombination mit einer rotierenden Schwungmasse (22) als Wechselstromquelle (28) aufweist.

8. Vorrichtung nach einem der Ansprüche 1 bis 7, **dadurch gekennzeichnet, dass** ein Transformator (18) zwischen dem Umrichter (9) und der Last (2) vorgesehen ist.

9. Vorrichtung nach einem der Ansprüche 1 bis 8, **dadurch gekennzeichnet, dass** die Koppeldrossel (5) teilweise auch zwischen dem Generator (8) und dem Umrichter (9) einerseits und der Last (2) andererseits vorgesehen ist.

## Claims

1. Device for uninterrupted power supply of an electric load (2) with alternating current, which, in an undisturbed normal case, is supplied by a power grid or another external power source (4),
comprising a coupling choke (5) between the load (2) and the external power source (4), comprising a generator (8) connected to the coupling choke (5) at the load side, wherein the generator (8) has a single winding which is used both as a motor winding and a generator winding,
comprising a substitute storage for electric energy, which, via a converter (9) is also connected to the coupling choke (5) at the load side, on the one hand, and to the single winding of the generator, on the other hand,
comprising a switch (6) which is arranged at the source side in front of the coupling choke (5), and which opens with beginning disturbance operation, and
comprising means for determining an output voltage provided to the load (2), which provide a measurement signal (25),
comprising means (27) for controlling the output voltage, which use the measurement signal (25) as an input signal and provide a control signal (26) to the converter as an output signal,
wherein the generator (8) runs both in undisturbed normal operation and in disturbance operation with breakdown of the external power source (4),
**characterised in that** the converter is an IGBT converter and that the means (27) for controlling the output voltage, both in the undisturbed normal operation and in the disturbance operation with breakdown of the external power source (4), adjust a time course of the output voltage to a desired shape by means of the converter.

2. Device according to claim 1, **characterised in that** the desired shape of the time course of the output voltage is sinusoidal.

3. Device according to any of the claims 1 and 2, **characterised in that** a combustion engine (16) is provided for driving the generator (8) in the disturbance operation.

4. Device according to claim 3, **characterised in that** the combustion engine (16) is connected to the generator (8) by means of an overtaking clutch (17).

5. Device according to any of the claims 1 to 4, **characterised in that** the substitute storage for electric energy comprises at least one DC energy source (10) or an AC power source (28).

6. Device according to claim 5, **characterised in that** the substitute storage for electric energy comprises a superconducting magnetic energy storage (SMES) (20), a super capacitance (19), a battery (11) or a fuel cell (21) as the DC energy source (10).

7. Device according to claim 6, **characterised in that** the substitute storage for electric energy comprises a generator (23) combined with a rotating mass (22) as the AC power source (28).

8. Device according to any of the claims 1 to 7, **characterised in that** the transformer (18) is arranged between the converter (6) and the load (2).

9. Device according to any of the claims 1 to 8, **characterised in that** the coupling choke (5) is partially also provided between the generator (8) and the converter (9), on the one hand, and the load (2), on the other hand.

## Revendications

1. Dispositif permettant l'alimentation en courant alternatif sans interruption d'une charge (2) électrique, qui en cours de service normal sans incident est alimentée par un réseau électrique ou une autre source de courant (4) externe,
comportant un self de couplage (5) entre la charge (2) et la source de courant (4) externe,
comportant un générateur (8) raccordé au self de couplage (5) du côté de la charge, ledit générateur (8) comportant un unique enroulement qui est utilisé tant sous forme d'enroulement de moteur que d'enroulement de générateur,
comportant un accumulateur de réserve pour l'énergie électrique qui est raccordé par l'intermédiaire d'un convertisseur (9), d'une part, au self de couplage (5) également du côté de la charge et, d'autre part, à l'unique enroulement du générateur,
comportant un commutateur (6) qui est disposé du côté de la source en amont du self de couplage (5) et qui ouvre lorsqu'un incident se produit, et
comportant des moyens (12) pour détecter une tension de sortie mise à la disposition de la charge (2), lesquels délivrent un signal de mesure (25),
comportant des moyens (27) pour régler la tension de sortie, lesquels utilisent le signal de mesure (25) en tant que signal d'entrée et délivrent au convertisseur un signal de commande (26) en tant que signal de sortie,
le générateur (8) continuant à fonctionner en cours de service normal sans incident, de même qu'en cours de service avec incident en cas de panne de la source de courant (4) externe,
**caractérisé en ce que** le convertisseur est un convertisseur du type IGBT et **en ce que** les moyens (27) pour régler la tension de sortie règlent à une forme souhaitée, au moyen du convertisseur, une courbe d'évolution dans le temps de la tension de sortie tant en cours de service normal sans incident qu'en cours de service avec incident en cas de panne de la source de courant (4) externe.

2. Dispositif selon la revendication 1, **caractérisé en ce que** la forme souhaitée de la courbe d'évolution dans le temps de la tension de sortie est une forme sinusoïdale.

3. Dispositif selon les revendications 1 et 2, **caractérisé en ce qu'**un moteur à combustion interne (16) est prévu pour actionner le générateur (8) en cas d'incident.

4. Dispositif selon la revendication 3, **caractérisé en ce que** le moteur à combustion interne (16) est couplé au générateur (8) par l'intermédiaire d'un accouplement à roue libre (17).

5. Dispositif selon l'une quelconque des revendications 1 à 4, **caractérisé en ce que** l'accumulateur de réserve pour l'énergie électrique comporte au moins une source de courant continu (10) ou une source de courant alternatif (28).

6. Dispositif selon la revendication 5, **caractérisé en ce que**, pour former la source de courant continu (10), l'accumulateur de réserve pour l'énergie électrique comporte un accumulateur d'énergie magnétique supraconducteur (SMES) (20) , une surcapacité (19), une batterie (11) ou une pile à combustible (21).

7. Dispositif selon la revendication 6, **caractérisé en ce que**, pour former la source de courant alternatif (28), l'accumulateur de réserve pour l'énergie électrique comporte un générateur (23) combiné à une masse d'inertie (22) rotative.

8. Dispositif selon l'une quelconque des revendications 1 à 7, **caractérisé en ce qu'**il est prévu un transformateur (18) entre le convertisseur (9) et la charge (2).

9. Dispositif selon l'une quelconque des revendications 1 à 8, **caractérisé en ce que** le self de couplage (5) est prévu en partie aussi entre le générateur (8) et le convertisseur (9), d'une part, et la charge (2), d'autre part.
